(19) Europäisches Patentamt
European Patent Office
Office européen des brevets

(11) Veröffentlichungsnummer: **0 415 203 B1**

# (12) EUROPÄISCHE PATENTSCHRIFT

(45) Veröffentlichungstag der Patentschrift: **19.10.94**

(51) Int. Cl.[5]: **C09B 55/00**, B41M 5/38

(21) Anmeldenummer: **90115763.6**

(22) Anmeldetag: **17.08.90**

## (54) Merocyaninartige Thiazolfarbstoffe sowie ein Verfahren zum thermischen Transfer dieser Farbstoffe.

(30) Priorität: **26.08.89 DE 3928243**

(43) Veröffentlichungstag der Anmeldung:
**06.03.91 Patentblatt 91/10**

(45) Bekanntmachung des Hinweises auf die Patenterteilung:
**19.10.94 Patentblatt 94/42**

(84) Benannte Vertragsstaaten:
**CH DE FR GB IT LI**

(56) Entgegenhaltungen:
**EP-A- 0 275 381**
**EP-A- 0 291 853**
**DE-A- 3 524 519**
**GB-A- 2 001 094**

(73) Patentinhaber: **BASF Aktiengesellschaft**
**Carl-Bosch-Strasse 38**
**D-67063 Ludwigshafen (DE)**

(72) Erfinder: **Bach, Volker, Dr.**
**Robert-Schuman-Strasse 8**
**D-6730 Neustadt (DE)**
Erfinder: **Etzbach, Karl-Heinz, Dr.**
**Carl-Bosch-Ring 55**
**D-6710 Frankenthal (DE)**
Erfinder: **Lamm, Gunther, Dr.**
**Heinrich-Heine-Strasse 7**
**D-6733 Hassloch (DE)**
Erfinder: **Sens, Ruediger, Dr.**
**Medicusstrasse 12**
**D-6800 Mannheim 1 (DE)**
Erfinder: **Unterforsthuber, Klaus**
**Deidesheimer Strasse 11**
**D-6701 Dannstadt-Schauernheim (DE)**
Erfinder: **Rausch-Meier, Rosemarie, Dr.**
**Franz-Ruecker-Allee 13**
**D-6000 Frankturt 90 (DE)**

**EP 0 415 203 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft neue Thiazolfarbstoffe der Formel I

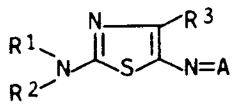

(I),

in der

$R^1$ und $R^2$ gleich oder verschieden sind und unabhängig voneinander jeweils Alkyl, das gegebenenfalls durch 1 bis 3 Sauerstoffatome unterbrochen ist, Alkanoyloxyalkyl oder Alkoxycarbonyloxyalkyl, wobei diese Reste jeweils bis zu 18 Kohlenstoffatome aufweisen und durch Phenyl, $C_1$-$C_4$-Alkylphenyl, $C_1$-$C_4$-Alkoxyphenyl, Hydroxy, Cyclohexyl oder Cyano substituiert sein können, Wasserstoff, gegebenenfalls durch $C_1$-$C_4$-Alkyl oder $C_1$-$C_4$-Alkoxy substituiertes Phenyl, Cyclohexyl oder einen Rest der Formel

$(CH_2\text{-})_kCOO\text{-}(Y\text{-}O\text{-})_m(W\text{-}O\text{-})_vL^1$ ,

worin

k für 2, 3 oder 4,

m und v gleich oder verschieden sind und unabhängig voneinander jeweils für 0, 1 oder 2,

Y und W gleich oder verschieden sind und unabhängig voneinander jeweils für $C_2$-$C_6$-Alkylen und

$L^1$ für $C_1$-$C_4$-Alkyl oder gegebenenfalls durch $C_1$-$C_4$-Alkyl oder $C_1$-$C_4$-Alkoxy substituiertes Phenyl stehen,

oder $R^1$ und $R^2$ zusammen mit dem sie verbindenden Stickstoffatom einen 5- oder 6-gliedrigen gesättigten heterocyclischen Rest, der weitere Heteroatome enthalten und durch $C_1$-$C_6$-Alkyl substituiert sein kann,

$R^3$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Hydroxy, Furyl oder Thienyl und

A einen Rest der Formel

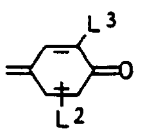

oder

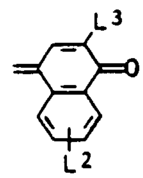

bedeuten, wobei

$L^2$ für Wasserstoff, Fluor, Chlor, Brom, Hydroxy, Nitro, $C_1$-$C_4$-Alkyl, Cyano, $C_1$-$C_4$-Alkylsulfonylamino oder einen Rest der Formel $COOR^1$, $CONHR^1$, $NHCOR^1$ oder $NHSO_2R^1$, worin $R^1$ jeweils die obengenannte Bedeutung besitzt, und

$L^3$ für Wasserstoff, Fluor, Chlor, Cyano oder einen Rest der Formel $CONHL^4$, $NHCOL^4$, $NHCONHL^4$, $SO_2NHL^4$, $NHSO_2L^4$ oder $COOR^1$ stehen, worin $R^1$ die obengenannte Bedeutung besitzt und $L^4$ jeweils die Bedeutung von Alkoxycarbonylphenyl, Alkoxycarbonyloxyphenyl, Alkanoylphenyl oder N-Monoalkylcarbamoylphenyl, wobei die Alkylreste in diesen Gruppen bis zu 12 Kohlenstoffatome aufweisen können, Phenyl, Thiazolyl oder $C_1$-$C_{12}$-Alkyl, das gegebenenfalls durch 1 bis 3 Sauerstoffatome unterbrochen ist, besitzt,

sowie ein Verfahren zum thermischen Transfer dieser Farbstoffe.

Aus der DE-A-3 524 519 sind Farbstoffe bekannt, die durch oxidative Kupplung von p-Phenylendiaminen auf Phenole hergestellt werden und die im Thermotransferdruck auf beschichtete Papiere Verwendung finden.

Ähnliche Farbstoffe, bei denen anstelle von Phenolen Naphthole verwendet werden und die für die gleiche Anwendung bestimmt sind, sind in der EP-A-227 096 sowie US-A-4 769 360 beschrieben.

Die EP-A-275 381 beschreibt ein Verfahren zur thermischen Übertragung von Cyanovinylthiazolen.

Aufgabe der vorliegenden Erfindung war es nun, neue merocyaninartige Farbstoffe, die einen heterocyclischen Rest aufweisen, bereitzustellen. Die neuen Farbstoffe sollten über vorteilhafte anwendungstechnische Eigenschaften verfügen.

Demgemäß wurden die eingangs näher beschriebenen Thiazolfarbstoffe der Formel I gefunden.

Alle in der obengenannten Formel auftretenden Alkylreste können sowohl geradkettig als auch verzweigt sein.

Geeignete Reste $R^1$, $R^2$, $R^3$, $L^1$, $L^2$ und $L^4$ sind z.B. Methyl, Ethyl, Propyl, Isopropyl, Butyl, Isobutyl, sec-Butyl oder tert-Butyl.

Reste $R^1$, $R^2$, $R^3$ und $L^4$ sind weiterhin z.B. Pentyl, Isopentyl, Neopentyl, tert-Pentyl, Hexyl, 2-Methylpentyl, Heptyl, Octyl, 2-Ethylhexyl oder Isooctyl.

Reste $R^1$, $R^2$ und $L^4$ sind weiterhin z.B. Nonyl, Isononyl, Decyl, Isodecyl, Undecyl oder Dodecyl.

Reste $R^1$ und $R^2$ sind weiterhin z.B. Tridecyl, Isotridecyl, Tetradecyl, Pentadecyl, Hexadecyl, Heptadecyl oder Octadecyl (Die Bezeichnungen Isooctyl, Isononyl, Isodecyl und Isotridecyl sind Trivialbezeichnungen und stammen von den nach der Oxosynthese erhaltenen Alkoholen (vgl. dazu Ullmanns Encyklopädie der technischen Chemie, 4. Auflage, Band 7, Seiten 215 bis 217 sowie Band 11, Seiten 435 und 436).) 2-Methoxyethyl, 2-Ethoxyethyl, 2-Propoxyethyl, 2-Butoxyethyl, 2-oder 3-Methoxypropyl, 2-oder 3-Ethoxypropyl, 2- oder 3-Propoxypropyl, 2-oder 3-Butoxypropyl, 4-Methoxybutyl, 4-Ethoxybutyl, 4-Butoxybutyl, 8-Butoxyoctyl, 2-Cyanoethyl, 3-Cyanopropyl, 4-Cyanobutyl, 2-Hydroxyethyl, 5-Hydroxynonyl, 4-(2-Methylphenyl)butyl, 3-Phenylbutyl, 2-Methoxybenzyl,

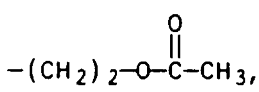, 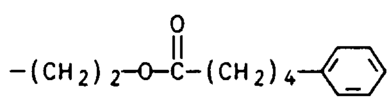, 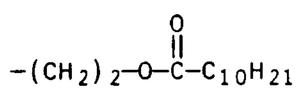,

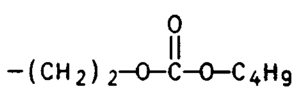,

$-(CH_2)_{10}-O-(CH_2)_4CH_3$,

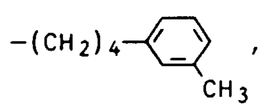,

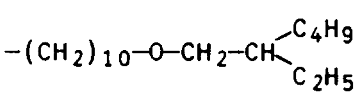,

$-(CH_2)_4-O-C_4H_9$,

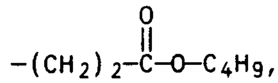

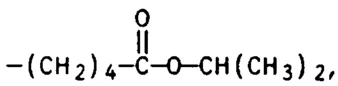, 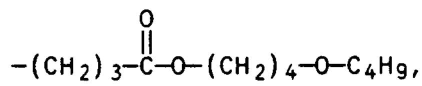,

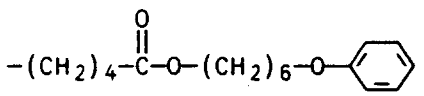, 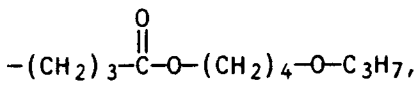,

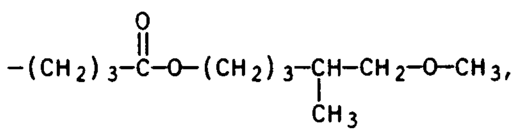, 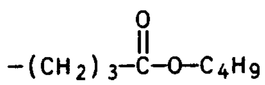,

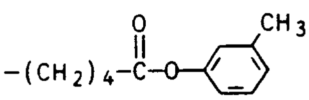, 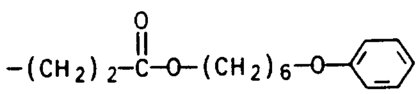, 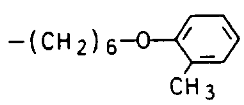,

$-(CH_2)_3-O-(CH_2)_6-O-C_4H_9$, $(C_2H_4O)_3C_2H_5$, $(C_2H_4O)_3C_3H_7$ oder

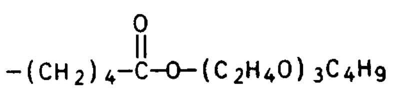.

Reste $R^1$, $R^2$, $R^3$ und $L^1$ sind weiterhin z.B. Phenyl, 2-, 3- oder 4-Methylphenyl, 2- oder 4-Isopropylphenyl, 2-Butylphenyl, 2-, 3- oder 4-Methoxyphenyl, 2-Propoxyphenyl, 4-Butoxyphenyl oder 2-(But-2-oxy)-phenyl.

Wenn $R^1$ und $R^2$ zusammen mit dem sie verbindenden Stickstoffatom einen 5- oder 6-gliedrigen gesättigten heterocyclischen Rest bedeuten, so kann dieser durch $C_1$-$C_6$-Alkyl substituiert sein und als weitere Heteroatome beispielsweise noch Stickstoff oder Sauerstoff enthalten.

Einzelne heterocyclische Reste sind z.B. Pyrrolidino, Piperidino, Morpholino, Piperazino, 2-Methylpyrrolidino, 3-Butylpyrrolidino, 4-Ethylpiperidino, 2,6-Dimethylpiperidino, 2-(Pent-2-yl)piperidino, 2-Methylmorpholino, 3-Ethyl-5-methylmorpholino, N-Methylpiperazino, N-Ethylpiperazino, 3-Butylhexahydropyrimidin-1-yl oder 3,6-Dimethylhexahydropyrimidin-1-yl.

Reste $L^4$ sind weiterhin z.B. Thiazol-2-yl, Thiazol-5-yl, 4-Propanoylphenyl, 4-Pentanoylphenyl, 4-(4-Methylpentanoyl)phenyl, 4-Ethoxycarbonylphenyl, 4-Propoxycarbonylphenyl, 4-Butoxycarbonylphenyl, 4-Pentyloxycarbonylphenyl oder 4-(N-Ethyl- oder N-Hexylcarbamoyl)phenyl.

Bevorzugt sind Thiazolfarbstoffe der Formel II

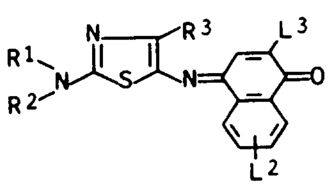 (II),

in der

$R^1$ und $R^2$ unabhängig voneinander Alkyl, das gegebenenfalls durch 1 bis 3 Sauerstoffatome unterbrochen ist, Alkanoyloxyalkyl oder Alkoxycarbonylalkyl, wobei diese Reste bis zu 12 Kohlenstoffatome aufweisen können oder zusammen mit dem sie verbindenden Stickstoffatom einen 5- oder 6-gliedrigen gesättigten heterocyclischen Rest, der weitere Heteroatome enthalten kann, und

$L^2$ Wasserstoff oder einen Rest der Formel $CONHR^1$, $NHCOR^1$ oder $NHSO_2R^1$, wobei $R^1$ jeweils die obengenannte Bedeutung besitzt, und

$L^3$ einen Rest der Formel $CONHL^4$, $NHCOL^4$, $SO_2NHL^4$ oder $NHSO_2L^4$

bedeuten, wobei $R^3$ und $L^4$ jeweils die obengenannte Bedeutung besitzen.

Besonders bevorzugt sind Thiazolfarbstoffe der Formel IIa

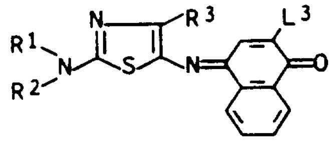

(IIa),

in der

$R^1$ und $R^2$ unabhängig voneinander jeweils $C_1$-$C_8$-Alkyl, das gegebenenfalls durch ein Sauerstoffatom unterbrochen ist, oder zusammen mit dem sie verbindenden Stickstoffatom Pyrrolidino, Piperidino oder Morpholino,

$R^3$ Phenyl, das gegebenenfalls durch Methyl oder Methoxy substituiert ist, Benzyl, das gegebenenfalls durch Methyl oder Methoxy substituiert ist, oder Thienyl und

$L^3$ einen Rest der Formel $CONHL^4$, $NHCOL^4$, $SO_2NHL^4$ oder $NHSO_2L^4$

bedeuten, wobei $L^4$ für $C_1$-$C_8$-Alkyl, das gegebenenfalls durch ein Sauerstoffatom unterbrochen ist, Phenyl, Thiazolyl, 4-($C_1$-$C_8$-Alkoxycarbonyl)phenyl oder 4-[N-($C_1$-$C_8$-Monoalkyl)carbamoyl]phenyl steht.

Die erfindungsgemäßen Thiazolfarbstoffe der Formel I werden nach an sich bekannten Methoden hergestellt.

Beispielsweise kann man von einem Thiazol der Formel III

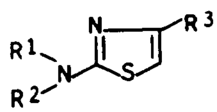

(III),

in der $R^1$, $R^2$ und $R^3$ jeweils die obengenannte Bedeutung besitzen, ausgehen und dieses mit einem Chinonderivat der Formel IVa oder IVb

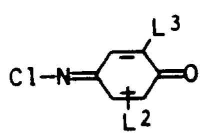

(IVa)

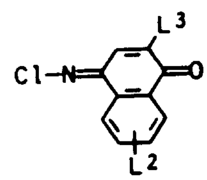

(IVb)

wobei $L^2$ und $L^3$ jeweils die obengenannte Bedeutung besitzen, umsetzen (Variante A - s. z.B. Houben-Weyl, Methoden der Organischen Chemie, Band Chinone II, Seiten 262 bis 265 sowie 299 ff). Die Chinone IVa und IVb erhält man durch Oxidation der entsprechenden p-Aminoverbindungen.

Es ist aber auch möglich, das Thiazol III zu nitrosieren und die Nitrosoverbindung dann mit einem Phenol der Formel Va oder einem Naphthol der Formel Vb

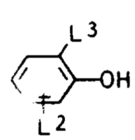

(Va)

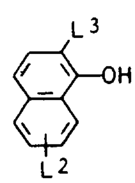

(Vb),

wobei $L^2$ und $L^3$ jeweils die obengenannte Bedeutung besitzen, zu kondensieren (Variante B - s. z.B. DE-A-3 716 656).

Eine weitere Aufgabe der vorliegenden Erfindung war es, ein neues Verfahren für den thermischen Transfer von Farbstoffen bereitzustellen.

Beim Thermotransferdruckverfahren wird ein Transferblatt, welches einen thermisch transferierbaren Farbstoff in einem oder mehreren Bindemitteln, gegebenenfalls zusammen mit geeigneten Hilfsmitteln, auf einem Träger enthält, mit einem Heizkopf mit kurzen Heizimpulsen (Dauer: Bruchteile einer Sekunde) von der Rückseite her erhitzt, wodurch der Farbstoff aus dem Transferblatt migriert und in die Oberflächenbeschichtung eines Aufnahmemediums hineindiffundiert. Der wesentliche Vorteil dieses Verfahrens besteht darin, daß die Steuerung der zur übertragenden Farbstoffmenge (und damit die Farbabstufung) durch Einstellung der an den Heizkopf abzugebenden Energie leicht möglich ist.

Allgemein wird die Farbaufzeichnung unter Verwendung der drei subtraktiven Grundfarben Gelb, Magenta und Cyan (und gegebenenfalls Schwarz) durchgeführt. Um eine optimale Farbaufzeichnung zu ermöglichen, müssen die Farbstoffe folgende Eigenschaften besitzen:

- leichte thermische Transferierbarkeit,
- geringe Migration innerhalb oder aus der Oberflächenbeschichtung des Aufnahmemediums bei Raumtemperatur,
- hohe thermische und photochemische Stabilität sowie Resistenz gegen Feuchtigkeit und chemische Stoffe,
- für subtraktive Farbmischung die geeigneten Farbtöne aufweisen,
- einen hohen molaren Absorptionskoeffizienten aufweisen,
- bei Lagerung des Transferblattes nicht auskristallisieren,
- technisch leicht zugänglich sein.

Diese Forderungen sind gleichzeitig sehr schwierig zu erfüllen, wie die Erfahrung lehrt.

Daher entsprechen die meisten der bekannten, für den thermischen Transferdruck verwendeten Farbstoffe nicht dem geforderten Anforderungsprofil.

Es wurde nun gefunden, daß die Übertragung von merocyaninartigen Farbstoffen von einem Träger auf ein mit Kunststoff beschichtetes Papier mit Hilfe einer Energiequelle vorteilhaft gelingt, wenn man einen Träger verwendet, auf dem sich ein oder mehrere Thiazolfarbstoffe der Formel I

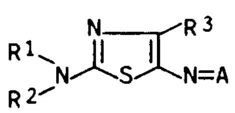

(I)

befinden, in der

| | |
|---|---|
| $R^1$ und $R^2$ | gleich oder verschieden sind und unabhängig voneinander jeweils Alkyl, das gegebenenfalls durch 1 bis 3 Sauerstoffatome unterbrochen ist, Alkanoyloxyalkyl oder Alkoxycarbonyloxyalkyl, wobei diese Reste jeweils bis zu 18 Kohlenstoffatome aufweisen und durch Phenyl, $C_1$-$C_4$-Alkylphenyl, $C_1$-$C_4$-Alkoxyphenyl, Hydroxy, Cyclohexyl oder Cyano substituiert sein können, Wasserstoff, gegebenenfalls durch $C_1$-$C_4$-Alkyl oder $C_1$-$C_4$-Alkoxy substituiertes Phenyl, Cyclohexyl oder einen Rest der Formel<br><br>$(CH_2-)_kCOO-(Y-O-)_m(W-O-)_vL^1$ ,<br><br>worin |
| k | für 2, 3 oder 4, |
| m und v | gleich oder verschieden sind und unabhängig voneinander jeweils für 0, 1 oder 2, |
| Y und W | gleich oder verschieden sind und unabhängig voneinander jeweils für $C_2$-$C_6$-Alkylen und |
| $L^1$ | für $C_1$-$C_4$-Alkyl oder gegebenenfalls durch $C_1$-$C_4$-Alkyl oder $C_1$-$C_4$-Alkoxy substituiertes Phenyl stehen,<br>oder $R^1$ und $R^2$ zusammen mit dem sie verbindenden Stickstoffatom einen 5- oder 6-gliedrigen gesättigten heterocyclischen Rest, der weitere Heteroatome enthalten und durch $C_1$-$C_6$-Alkyl substituiert sein kann, |
| $R^3$ | Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Hydroxy, Furyl oder Thienyl und |
| A | einen Rest der Formel |

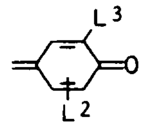

oder

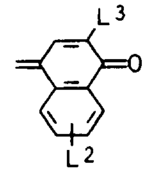

bedeuten, wobei

$L^2$ für Wasserstoff, Fluor, Chlor, Brom, Hydroxy, Nitro, $C_1$-$C_4$-Alkyl, Cyano, $C_1$-$C_4$-Alkylsulfonylamino oder einen Rest der Formel $COOR^1$, $CONHR^1$, $NHCOR^1$ oder $NHSO_2R^1$, worin $R^1$ jeweils die obengenannte Bedeutung besitzt, und

$L^3$ für Wasserstoff, Fluor, Chlor, Cyano oder einen Rest der Formel $CONHL^4$, $NHCOL^4$, $NHCONHL^4$, $SO_2NHL^4$, $NHSO_2L^4$ oder $COOR^1$ stehen, worin $R^1$ die obengenannte Bedeutung besitzt und $L^4$ die Bedeutung von Alkoxycarbonylphenyl, Alkoxycarbonyloxyphenyl, Alkanoylphenyl oder N-Monoalkylcarbamoylphenyl, wobei die Alkylreste in diesen Gruppen bis zu 12 Kohlenstoffatome aufweisen können, Phenyl, Thiazolyl oder $C_1$-$C_{12}$-Alkyl, das gegebenenfalls durch 1 bis 3 Sauerstoffatome unterbrochen ist, besitzt.

Bevorzugt ist die Verfahrensweise für die Farbstoffe der obengenannten Formel II, insbesondere für die Farbstoffe der obengenannten Formel IIa.

Als Energiequelle im erfindungsgemäßen Verfahren kann z.B. ein Thermokopf oder auch ein Laser in Betracht kommen. Die Verwendung eines Thermokopfes ist bevorzugt.

Zur Herstellung der für das erfindungsgemäße Verfahren benötigten Farbstoffträger werden die Farbstoffe in einem geeigneten organischen Lösungsmittel, z.B. Chlorbenzol, Isobutanol, Methylethylketon, Methylenchlorid, Toluol, Tetrahydrofuran oder deren Mischungen, mit einem oder mehreren Bindemitteln, gegebenenfalls unter Zugabe von Hilfsmitteln, zu einer Druckfarbe verarbeitet. Diese enthält den Farbstoff vorzugsweise in molekular-dispers gelöster Form. Die Druckfarbe kann mittels einer Rakel auf den inerten Träger aufgetragen und die Färbung an der Luft getrocknet werden.

Als Bindemittel kommen alle Resins oder Polymermaterialien in Betracht, welche in organischen Lösungsmitteln löslich sind und den Farbstoff an den inerten Träger abriebfest zu binden vermögen. Dabei werden solche Bindemittel bevorzugt, welche den Farbstoff nach Trocknung der Druckfarbe an der Luft in Form eines klaren, transparenten Films aufnehmen, ohne daß dabei eine sichtbare Auskristallisation des Farbstoffes auftritt.

Beispiele für solche Bindemittel sind Cellulosederivate, z.B. Methylcellulose, Ethylcellulose, Ethylhydroxyethylcellulose, Hydroxypropylcellulose, Celluloseacetat oder Celluloseacetobutyrat, Stärke, Alginate, Alkylresins, Vinylresins, Polyvinylalkohol, Polyvinylacetat, Polyvinylbutyrat oder Polyvinylpyrrolidone. Weiterhin kommen Polymere und Copolymere von Acrylaten oder deren Derivate, wie Polyacrylsäure, Polymethylmethacrylat oder Styrolacrylatcopolymere, Polyesterresins, Polyamidresins, Polyurethanresins oder natürliche CH-Resins, wie Gummi Arabicum, als Bindemittel in Betracht. Weitere geeignete Bindemittel sind z.B. in der DE-A-3 524 519 beschrieben.

Bevorzugte Bindemittel sind Ethylcellulose, Ethylhydroxyethylcellulose, Polyvinylbutyrat oder Polyvinylacetat.

Das Gewichtsverhältnis Bindemittel:Farbstoff beträgt im allgemeinen 1:1 bis 5:1.

Als Hilfsmittel kommen z.B. Trennmittel in Betracht, wie sie in der EP-A-227 092, EP-A-192 435 oder den dort zitierten Patentanmeldungen genannt sind. Darüber hinaus sind besonders organische Additive zu nennen, welche das Auskristallisieren der Transferfarbstoffe bei Lagerung und beim Erhitzen des Farbbandes verhindern, z.B. Cholesterin oder Vanillin.

Inerte Träger sind z.B. Seiden-, Lösch- oder Pergaminpapier oder Kunststoffolien mit guter Wärmebeständigkeit, z.B. gegebenenfalls metallbeschichteter Polyester, Polyamid oder Polyimid. Der inerte Träger wird auf der der Energiequelle zugewandten Seite gegebenenfalls zusätzlich mit einer Gleitmittelschicht (Slipping layer) beschichtet, um ein Verkleben der Energiequelle mit dem Trägermaterial zu verhindern. Geeignete Gleitmittel werden z.B. in der EP-A-216 483 oder EP-A-227 095 beschrieben. Die Dicke des Farbstoff-Trägers beträgt im allgemeinen 3 bis 30 $\mu m$, vorzugsweise 5 bis 10 $\mu m$.

Als Farbstoffnehmerschicht kommen prinzipiell alle temperaturstabilen Kunststoffschichten mit Affinität zu den zu transferierenden Farbstoffen in Betracht, deren Glasumwandlungstemperatur (Tg) vorzugsweise im Temperaturbereich $50\,°C < Tg < 100\,°C$ liegen sollte, z.B. modifizierte Polycarbonate oder Polyester. Geeignete Rezepturen für die Nehmerschichtzusammensetzung werden z.B. in der EP-A-227 094, EP-A-133 012, EP-A-133 011, EP-A-111 004, JP-A-199 997/1986, JP-A-283 595/1986, JP-A-237 694/1986 oder JP-A-127 392/1986 ausführlich beschrieben.

Die Übertragung erfolgt vorzugsweise mittels eines Thermokopfes, der auf eine Temperatur von ≧ 300 °C aufheizbar sein muß, damit der Farbstofftransfer im Zeitbereich t: 0 < t < 15 msec erfolgen kann. Dabei migriert der Farbstoff aus dem Transferblatt und diffundiert in die Oberflächenbeschichtung des Aufnahmemediums.

Im Vergleich zu den bei den bekannten Verfahren verwendeten Farbstoffen zeichnen sich die im erfindungsgemäßen Verfahren übertragenen neuen Farbstoffe im allgemeinen durch verbesserte Migrationseigenschaften im Aufnahmemedium bei Raumtemperatur, leichtere thermische Transferierbarkeit, leichtere technische Zugänglichkeit, bessere Resistenz gegen Feuchtigkeit und chemische Stoffe, höhere Farbstärke, bessere Löslichkeit, höhere Lichtechtheit und insbesondere durch höhere Farbtonreinheit aus.

Die folgenden Beispiele sollen die Erfindung näher erläutern. Angaben über Prozente beziehen sich, sofern nicht anders vermerkt, auf das Gewicht.

Herstellung der Thiazolfarbstoffe

Beispiel für die Synthese nach Variante A

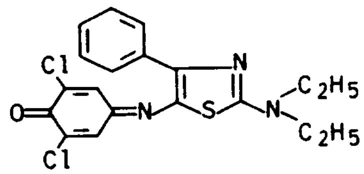

5,9 g 2,6-Dichlorchinonchlorimid (Paste ca. 90 %ig) und 7,3 g 2-Diethylamino-4-phenylthiazol wurden bei Raumtemperatur in 100 ml Eisessig gelöst. Man rührte 30 Minuten nach, wobei die Temperatur auf 35 °C anstieg und gab dann Eiswasser dazu. Die dabei anfallende ölartige Phase wurde abdekantiert, die Lösung mit Eiswasser verdünnt und mit 10 %iger Natronlauge auf pH 7,2 gestellt.

Der entstandene blaue Niederschlag wurde abgesaugt, mit Wasser gewaschen und bei 30 °C im Vakuumtrockenschrank getrocknet.

Ausbeute: 6,2 g Rohmaterial

Nach säulenchromatographischer Reinigung über Silicagel (Eluens: Toluol/Essigester 8:2 v/v) erhielt man 3 g spektral reines Produkt. $\lambda_{max}$ (Methylenchlorid): 617 nm.

Beispiel für die Synthese nach Variante B

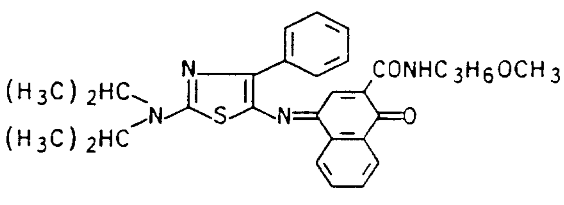

12,95 g 1-Hydroxy-8-naphthoesäure-N-(3-methoxypropyl)amid wurden in 100 ml Essigsäureanhydrid vorgelegt. Nach Zugabe einer äquimolaren Menge von 5-Nitroso-2-diisopropylaminothiazol, gelöst in 150 ml Methylenchlorid, wurde unter Abdestillieren des Methylenchlorids aufgeheizt. Bei 100 °C war die Reaktion vervollständigt. Danach wurde unter Rühren abgekühlt, bei 40 °C 200 ml Methylenchlorid zugegeben und Essigsäureanhydrid durch Zugabe von heißem Wasser (60 °C) zerstört. Es wurde 15 Minuten bei 45 bis 50 °C nachgerührt (Rückfluß). Im Scheidetrichter wurden die Phasen danach getrennt und die organische Phase am Rotationsverdampfer eingeengt. Der Rückstand wurde mit 400 ml Wasser versetzt und vorsichtig mit Natrumbicarbonat neutralisiert, wobei das Zielprodukt als Öl anfiel.

1. Reinigung: Das Öl wurde in Methylenchlorid gelöst und über Kieselgel gegeben. Ausbeute: 9,3 g.
2. Reinigung: Säulenchromatographie, Kieselgel Eluens: Essigester Ausbeute: 3,2 g spektral reines Produkt. $\lambda_{max}$ (Tetrahydrofuran): 619 nm

Transfer der Thiazolfarbstoffe

Um das Transferverhalten der Farbstoffe quantitativ und in einfacher Weise prüfen zu können, wurde der

Thermotransfer mit großflächigen Heizbacken statt eines Thermokopfes durchgeführt, wobei die Transfertemperatur im Bereich 70 °C < T < 120 °C variiert und die Transferzeit auf 2 Minuten festgelegt wurde.

α) Allgemeines Rezept für die Beschichtung der Träger mit Farbstoff:

1 g Bindemittel wurden in 8 ml Toluol/Ethanol (8:2 v/v) bei 40 bis 50 °C gelöst. Dazu wurde eine Lösung aus 0,25 g Farbstoff in 5 ml Tetrahydrofuran eingerührt. Die so erhaltene Druckpaste wurde mit einer 80 µm Rakel auf eine Polyesterfolie (Dicke: 6 bis 10 µm) abgezogen und mit einem Fön getrocknet.

β) Prüfung auf thermische Transferierbarkeit

Die verwendeten Farbstoffe wurden in der folgenden Weise geprüft:

Die den zu prüfenden Farbstoff in der Beschichtungsmasse (Vorderseite) enthaltende Polyesterfolie (Geber) wurde mit der Vorderseite auf kommerziell erhältliches Hitachi Color Video Print Paper (Nehmer) gelegt und aufgedrückt. Geber/Nehmer wurden dann mit Aluminiumfolie umwickelt und zwischen zwei beheizten Platten bei verschiedener Temperatur T (im Temperaturintervall 70°C < T < 120°C) erhitzt. Die in die glänzende Kunststoffschicht des Nehmers diffundierte Farbstoffmenge ist proportional der optischen Dichte (= Extinktion A). Letztere wurde photometrisch bestimmt. Trägt man den Logarithmus der im Temperaturintervall zwischen 80 und 110°C gemessenen Extinktion A der angefärbten Nehmerpapiere gegen die zugehörige reziproke absolute Temperatur auf, so erhält man Geraden, aus deren Steigung die Aktivierungsenergie $\Delta E_T$ für das Transferexperiment berechnet wird:

$$\Delta E_T = 2,3 \cdot R \cdot \frac{\Delta \log A}{\Delta\left[\frac{1}{T}\right]}$$

Zur vollständigen Charakterisierung wurde aus den Auftragungen zusätzlich die Temperatur T* [°C] entnommen, bei der, falls nicht anders angegeben, die Extinktion A der angefärbten Nehmerpapiere den Wert 1 erreicht.

Die in den folgenden Tabellen aufgeführten Farbstoffe wurden nach α) verarbeitet und die erhaltenen, mit Farbstoff beschichteten Träger nach β) auf das Transferverhalten geprüft. In den Tabellen 1 und 2 sind jeweils die Thermotransferparameter T* und $\Delta E_T$, die Absorptionsmaxima der Farbstoffe $\lambda_{max}$ (gemessen in Methylenchlorid), und die verwendeten Bindemittel aufgeführt.

Dabei gelten folgende Abkürzungen:

BM = Bindemittel (EC = Ethylcellulose,
EHEC = Ethylhydroxyethylcellulose,
AC = Celluloseacetobutyrat,
MS = Mischung aus Polyvinylbutyrat und Ethylcellulose im Gewichtsverhältnis 2:1)

Die Farbstoffe in den Tabellen 1, 11 und 12 wurden nach Variante A synthetisiert.

Die Farbstoffe in den Tabellen 2 bis 10 wurden nach Variante B synthetisiert. Die Tabellen 3 bis 10 enthalten die Absorptionsmaxima $\lambda_{max}$ (gemessen in Tetrahydrofuran), den $R_f$-Wert der Farbstoffe sowie die bei der Dünnschichtchromatographie verwendeten Fließmittel (T = Toluol; E = Essigester - Die genannten Mischungsverhältnisse beziehen sich auf das Volumen.). Als DC-Trägermaterialien wurden DC-Alufolien der Fa. Merck (Darmstadt) mit der Bezeichnung: Kieselgel 60 F 254, 0,2 mm, Art-Nr. 5554, verwendet.

Tabelle 1

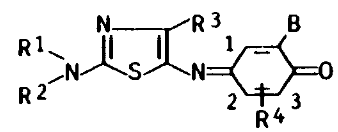

| Beispiel Nr. | $R^1$ | $R^2$ | $R^3$ | $R^4$ | B | BM | $\lambda_{max}$ [nm] | T* [°C] | $\Delta E_T$ $\left[\frac{kcal}{mol}\right]$ |
|---|---|---|---|---|---|---|---|---|---|
| 1 | $C_2H_5$ | $C_2H_5$ | $C_6H_5$ | 3-Cl | Cl | EC | 617 | 82 | 24 |
| 2 | $C_2H_5$ | $C_2H_5$ | Thien-2-yl | H | $NHCOCH_3$ | MS | 654 | 86 | 16 |

Tabelle 2

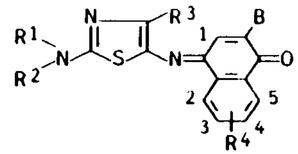

| Beispiel Nr. | $R^1$ | $R^2$ | $R^3$ | $R^4$ | B | BM | $\lambda_{max}$ [nm] | T* [°C] | $\Delta E_T$ $\left[\frac{kcal}{mol}\right]$ |
|---|---|---|---|---|---|---|---|---|---|
| 3 | $CH(CH_3)_2$ | $CH(CH_3)_2$ | $C_6H_5$ | H | $CONHC_7H_{15}$ | MS | 635 | 81 | 20 |
| 4 | $C_2H_5$ | $C_2H_5$ | Thien-3-yl | H | $CONHC_7H_{15}$ | MS | 644 | 82 | 15 |
| 5 | $C_2H_5$ | $CH_3OC_3H_6$ | Thien-3-yl | H | $CONHC_7H_{15}$ | MS | 643 | 85 | 14 |
| 6 | $C_2H_5$ | $H_5C_2(OH_4C_2)_3$ | $C_6H_5$ | H | CONH– 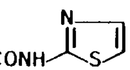 | EC | 670 | 90 | 13 |
| 7 | $C_2H_5$ | $C_2H_5$ | $C_6H_5$ | H | $CONHC_2H_5$ | EC | 627 | 84 | 18 |
| 8 | $C_2H_5$ | $C_2H_5$ | $C_6H_5$ | H | CONH– 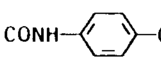 –$CONHC_8H_{17}$ | EC | 655 | 104 | 20 |

Tabelle 3

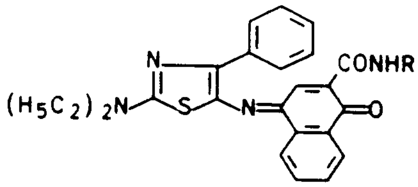

| Beispiel Nr. | R | $\lambda_{max}$ [nm] | $R_f$ | Fließmittel |
|---|---|---|---|---|
| 9 | 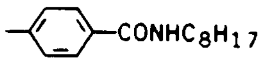 | 644 | 0,36 | T : E 3 : 2 |
| 10 | 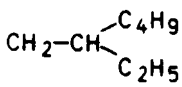 | 620 | 0,22 | T : E 9 : 1 |
| 11 | 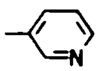 | 645 | 0,15 | E |
| 12 | 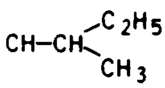 | 620 | 0,24 | T : E 8 : 2 |
| 13 | $C_2H_4OCH_3$ | 619 | 0,17 | E |
| 14 | 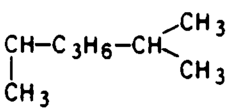 | 620 | 0,42 | T : E 8 : 2 |
| 15 | 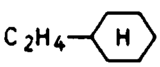 | 620 | 0,36 | T : E 8 : 2 |
| 16 | $C_{18}H_{37}$ | 620 | 0,32 | T : E 9 : 1 |

Tabelle 4

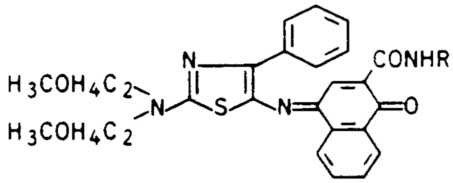

| Beispiel Nr. | R | $\lambda_{max}$ [nm] | RF | Fließmittel |
|---|---|---|---|---|
| 17 | $C_2H_5$ | 618 | 0,32 | E |
| 18 | $C_2H_4OCH_3$ | 618 | 0,17 | E |
| 19 | $C_3H_6OCH_3$ | 618 | 0,16 | E |
| 20 | 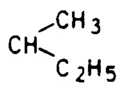 | 618 | 0,48 | E |
| 21 | 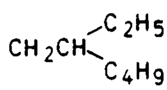 | 618 | 0,44 | T : E 3 : 2 |
| 22 | 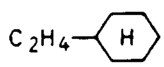 | 618 | 0,47 | T : E 3 : 2 |
| 23 | $C_{18}H_{37}$ | 618 | 0,43 | T : E 3 : 2 |
| 24 | 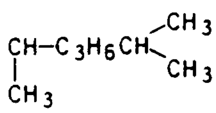 | 618 | 0,46 | T : E 3 : 2 |
| 25 | 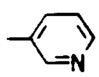 | 643 | 0,096 | E |

Tabelle 5

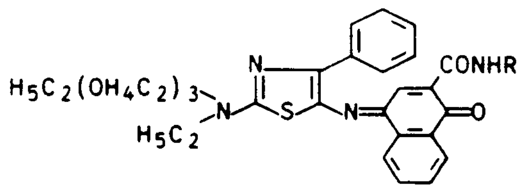

| Beispiel Nr. | R | $\lambda_{max}$ [nm] | $R_f$ | Fließmittel |
|---|---|---|---|---|
| 26 | $C_2H_5$ | 620 | 0,22 | E |
| 27 | $C_2H_4OCH_3$ | 621 | 0,125 | E |
| 28 | $C_2H_5$<br>$CH_2CH$<br>$C_4H_9$ | 621 | 0,32 | T : E 3 : 2 |
| 29 | 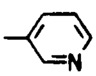 | 647 | 0,07 | E |

Tabelle 6

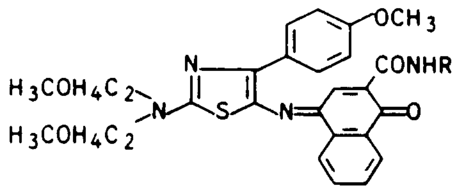

| Beispiel Nr. | R | $\lambda_{max}$ [nm] | $R_f$ | Fließmittel |
|---|---|---|---|---|
| 30 | $C_2H_5$ | 636 | 0,17 | E |
| 31 | $C_2H_4OCH_3$ | 636 | 0,098 | E |
| 32 | $C_3H_6OCH_3$ | 636 | 0,14 | E |
| 33 | 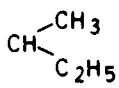 | 636 | 0,36 | E |
| 34 | 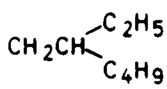 | 637 | 0,43 | T : E 3 : 2 |
| 35 | 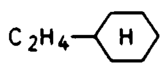 | 637 | 0,40 | T : E 3 : 2 |
| 36 | $C_{18}H_{37}$ | 637 | 0,46 | T : E 3 : 2 |
| 37 | 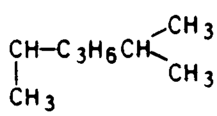 | 637 | 0,37 | T : E 3 : 2 |
| 38 | 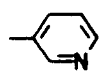 | 675 | 0,08 | E |

Tabelle 7

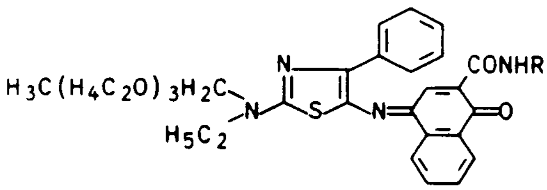

| Beispiel Nr. | R | $\lambda_{max}$ [nm] | $R_f$ | Fließmittel |
|---|---|---|---|---|
| 39 | $C_2H_5$ | 622 | 0,12 | E |
| 40 | $C_2H_4OCH_3$ | 622 | 0,068 | E |
| 41 | $C_3H_6OCH_3$ | 622 | 0,05 | E |
| 42 | 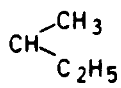 | 622 | 0,26 | E |
| 43 | 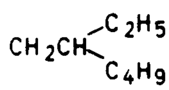 | 623 | 0,14 | T : E 3 : 2 |
| 44 | 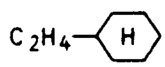 | 622 | 0,21 | T : E 3 : 2 |
| 45 | $C_{18}H_{37}$ | 622 | 0,23 | T : E 3 : 2 |
| 46 | 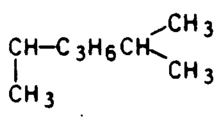 | 622 | 0,18 | T : E 3 : 2 |
| 47 | 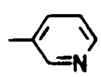 | 649 | 0,04 | E |

Tabelle 8

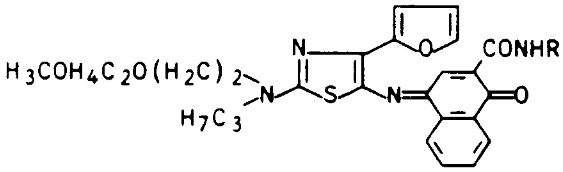

| Beispiel Nr. | R | λ_max [nm] | $R_f$ | Fließmittel |
|---|---|---|---|---|
| 48 | $C_2H_5$ | 644 | - | - |
| 49 | $C_2H_4OCH_3$ | 644 | 0,14 | E |
| 50 | $C_3H_6OCH_3$ | 643 | 0,21 | E |
| 51 | 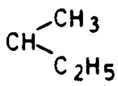 | 645 | 0,57 | E |
| 52 | 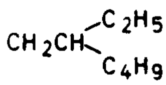 | 646 | 0,70 | E |
| 53 | $C_2H_4$– 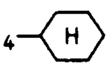 | 645 | 0,63 | E |
| 54 | $C_{18}H_{37}$ | 637 | 0,68 | E |
| 55 | 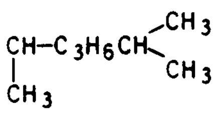 | 644 | 0,87 | E |

Tabelle 9

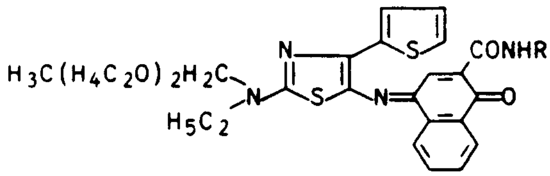

| Beispiel Nr. | R | $\lambda_{max}$ [nm] | $R_f$ | Fließmittel |
|---|---|---|---|---|
| 56 | $C_2H_5$ | 652 | - | - |
| 57 | $C_2H_4OCH_3$ | 652 | 0,098 | E |
| 58 | $C_3H_6OCH_3$ | 653 | 0,09 | E |
| 59 | 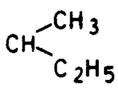 | 653 | 0,42 | E |
| 60 | 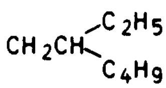 | 653 | 0,31 | T : E 3 : 2 |
| 61 | $C_2H_4$— 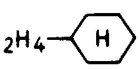 | 653 | 0,25 | T : E 3 : 2 |
| 62 | $C_{18}H_{37}$ | 652 | 0,33 | T : E 3 : 2 |
| 63 | 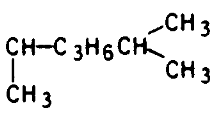 | 652 | 0,29 | T : E 3 : 2 |
| 64 | 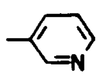 | 691 | - | - |

Tabelle 10

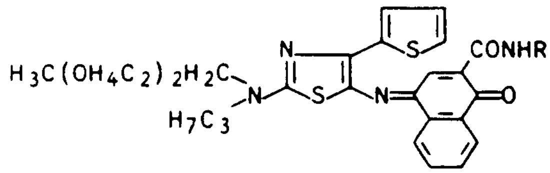

| Beispiel Nr. | R | $\lambda_{max}$ [nm] | $R_f$ | Fließmittel |
|---|---|---|---|---|
| 65 | $C_2H_5$ | 653 | 0,27 | E |
| 66 | $C_2H_4OCH_3$ | 654 | 0,10 | E |
| 67 | $CH_2CH\genfrac{}{}{0pt}{}{C_2H_5}{C_4H_9}$ | 655 | 0,35 | T : E 3 : 2 |

Tabelle 11

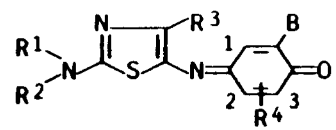

| Beispiel Nr. | $R^1$ | $R^2$ | $R^3$ | $R^4$ | B | $\lambda_{max}$ [nm] | Lösungsmittel |
|---|---|---|---|---|---|---|---|
| 68 | $C_2H_5$ | $C_2H_5$ | 2-Thienyl | 3-$NHCOCH_3$ | H | 655 | Ethanol |
| 69 | $C_2H_5$ | $C_2H_5$ | 2-Thienyl | 3-$NHCOCH_3$ | H | 654 | Methylenchlorid |

Tabelle 12

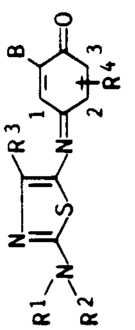

| Beispiel Nr. | R1 | R2 | R3 | $R^4$ | B | λmax [nm] | Lösungsmittel |
|---|---|---|---|---|---|---|---|
| 70 | $C_2H_5$ | $C_2H_5$ | $C_6H_5$ | 3-Cl | Cl | 624 | Dimethylformamid |
| 71 | $C_2H_5$ | $C_2H_5$ | $C_6H_5$ | 3-Cl | Cl | 617 | Methylenchlorid |
| 72 | $C_2H_5$ | $C_2H_5$ | $C_6H_5$ | 3-Cl | Cl | 626, 660 | Ethanol |
| 73 | $C_2H_5$ | $C_2H_5$ | 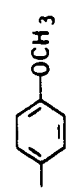 | 3-Cl | Cl | 622 | Tetrahydrofuran |

Auch die in den folgenden Tabellen 13 und 14 aufgeführten Farbstoffe sind für den diffusionskontrollierten Thermotransferdruck auf beschichtete Papiere gut geeignet.

Tabelle 13

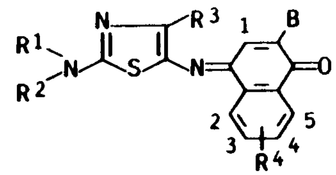

| Beispiel Nr. | $R^1$ | $R^2$ | $R^3$ | $R^4$ | B | Farbe |
|---|---|---|---|---|---|---|
| 74 | $C_2H_5$ | $CH(CH_3)_2$ | $C_6H_5$ | H | $CONHC_2H_5$ | Cyan |
| 75 | $C_4H_9$ | $C_2H_5$ | $C_6H_5$ | H | $CONHC_4H_9$ | Cyan |
| 76 | $C_4H_9$ | $C_4H_9$ | $C_6H_5$ | H | $CONHC_6H_5COOC_2H_5$ | Cyan |
| 77 | $C_3H_7$ | $C_3H_7$ | Thien-2-yl | H | $CONHC_2H_5$ | Türkis |
| 78 | $C_2H_5$ | $C_4H_9$ | Thien-3-yl | H | $CONHC_3H_7$ | Cyan |
| 79 | $C_2H_5$ | $C_4H_9$ | Thien-3-yl | H | $CONHC_6H_4COC_5C_{11}$ | Cyan |
| 80 | $C_2H_5$ | $C_5H_{11}$ | Thien-3-yl | H | $NHCOC_2H_5$ | Cyan |
| 81 | $C_4H_9$ | $CH(CH_3)_2$ | $C_6H_5$ | H | $CONHC_6H_4CONHC_5H_{11}$ | Cyan |
| 82 | $C_2H_5$ | $C_4H_9$ | $C_6H_5$ | 2-$NHSO_2CH_3$ | $CONHC_2H_5$ | Cyan |
| 83 | $C_2H_4CN$ | $C_4H_9$ | 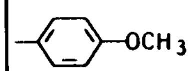 | H | $CONHC_6H_4OCOC_4H_9$ | Türkis |
| 84 | $C_3H_7$ | $C_2H_5$ | 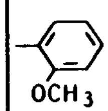 | H | $CONHC_3H_7$ | Cyan |

Tabelle 13 (Fortsetzung)

| Beispiel Nr. | $R^1$ | $R^2$ | $R^3$ | $R^4$ | B | Farbe |
|---|---|---|---|---|---|---|
| 85 | $C_2H_5$ | $C_2H_5$ | 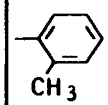 | H | $CONH(C_2H_4O)_2C_2H_5$ | Cyan |
| 86 | $C_4H_9OC_2H_5$ | $C_4H_9$ | $C_6H_5$ | H | $NHCOC_3H_6OC_2H_5$ | Cyan |
| 87 | $C_2H_5$ | $C_4H_9OC_3H_6$ | Thien-3-yl | H | $CONHC_3H_6OC_2H_4OC_6H_5$ | Cyan |
| 88 | $C_2H_5$ | $C_2H_5$ | $C_6H_5$ | 2-$NHCOCH_3$ | $CONHC_3H_6OCH_3$ | Cyan |
| 89 | $C_2H_4CO_2C_2H_5$ | $C_3H_7$ | $C_6H_5$ | H | $CONHC_6H_4CO_2C_3H_7$ | Cyan |
| 90 | $C_2H_5$ | $C_2H_5O_2CC_2H_4$ | Thien-3-yl | H | $NHCOC_6H_4CO_2C_8H_{17}$ | Blau |
| 91 | $C_4H_9$ | $C_2H_5$ | Benzyl | H | $CONHC_4H_9$ | Blau |
| 92 | $C_4H_9$ | $C_4H_9$ | $C_6H_5$ | H | $CO_2C_4H_9$ | Cyan |
| 93 | $CH_3OC_3H_6$ | $C_3H_7$ | 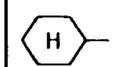 | H | CN | Blau |
| 94 | $C_2H_5$ | $C_2H_5$ | $C_6H_5$ | H | $CONHC_6H_4CONHC_3H_7$ | Cyan |
| 95 | $C_4H_9$ | $C_2H_5$ | $C_6H_5$ | H | $NO_2$ | Cyan |
| 96 | $C_2H_4CO_2C_2H_5$ | $C_4H_9$ | Thien-3-yl | 2-CN | $CONHCH_3$ | Cyan |
| 97 | $C_3H_7$ | $C_2H_5$ | $C_6H_5$ | 5-$CONHC_2H_5$ | H | Blau |
| 98 | $C_4H_9$ | $C_4H_9$ | Thien-3-yl | 5-$NHCOC_2H_5$ | H | Blau |
| 99 | $C_3H_7$ | $C_2H_5$ | 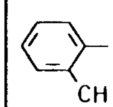 | 2-$CO_2C_3H_7$ | $CONHC_5H_{11}$ | Cyan |

Tabelle 14 (Fortsetzung)

| Beispiel Nr. | $R^1$ | $R^2$ | $R^3$ | $R^4$ | B | Farbe |
|---|---|---|---|---|---|---|
| 100 | $C_4H_9$ | $C_4H_9OC_3H_6$ | $C_6H_5$ | $2-NO_2$ | $CONHC_4H_9$ | Cyan |
| 101 | $C_2H_5$ | $C_2H_5$ | $C_6H_5$ | $2-NHCOCH_3$ | $SO_2NHCH_3$ | Cyan |
| 102 | $C_4H_9$ | $C_2H_5$ | $C_6H_5$ | H | $SO_2NHC_2H_5$ | Cyan |
| 103 | $C_2H_5$ | $C_3H_7$ | Thien-3-yl | H | $SO_2NH(CH_2)_2C_6H_5$ | Cyan |
| 104 | $C_3H_7$ | $C_3H_7$ | $C_6H_5$ | $2-NHCOCH_3$ | CN | Cyan |
| 105 | $C_2H_5$ | $C_2H_5$ | Thien-2-yl | H | Cl | Blau |
| 106 | $C_4H_9$ | $C_2H_5$ | $C_6H_5$ | $5-NHCOCH_3$ | $SO_2NHC_2H_5$ | Cyan |
| 107 | $C_2H_5$ | $C_4H_9$ | Thien-3-yl | 2-Cl | $SO_2NHC_6H_4CO_2CH(CH_3)(C_4H_9)$ | Cyan |
| 108 | $C_4H_9$ | $C_6H_{13}$ | $C_6H_5$ | 2-OH | $NHCON(C_4H_9)_2$ | Cyan |
| 109 | $C_2H_5$ | $C_4H_9$ | $C_6H_5$ | H | $NHSO_2C_4H_9$ | Cyan |
| 110 | $C_4H_9$ | $C_3H_7$ | Thien-2-yl | H | $NHSO_2(CH_2)_3CH(C_2H_5)(CH_3)$ | Cyan |
| 111 | $C_2H_5$ | $C_2H_5$ | $C_6H_5$ | $5-NHSO_2CH_3$ | CN | Cyan |
| 112 | $C_4H_9$ | $C_2H_5$ | $C_6H_5$ | 4-Cl | $NHSO_2C_2H_5$ | Cyan |
| 113 | $C_2H_5$ | $C_4H_9$ | 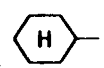 | H | -CONH- 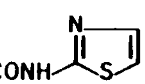 | Cyan |

Tabelle 14

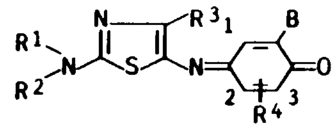

| Beispiel Nr. | $R^1$ | $R^2$ | $R^3$ | $R^4$ | B | Farbe |
|---|---|---|---|---|---|---|
| 114 | $C_2H_5$ | $C_4H_9$ | $C_6H_5$ | H | $NHCOCH_3$ | Blau |
| 115 | $C_2H_5$ | $C_4H_9$ | $C_6H_5$ | H | $NHSO_2C_2H_5$ | Blau |
| 116 | $C_3H_7$ | $C_4H_9$ | $C_6H_5$ | 2-$NHSO_2C_2H_5$ | $CONHC_2H_5$ | Cyan |
| 117 | $C_2H_5$ | $C_4H_9$ | $C_6H_5$ | Cl | $CONHC_2H_5$ | Cyan |
| 118 | $C_4H_9OCH_3$ | $C_2H_5$ | $C_6H_5$ | 2-$NHCOCH_3$ | $CONHC_7H_{15}$ | Cyan |
| 119 | $C_2H_5$ | $C_4H_9$ | $C_6H_5$ | 3-Cl | Cl | Blau |
| 120 | $C_2H_5$ | $C_4H_9$ | Thien-2-yl | 3-Cl | Cl | Cyan |
| 121 | $C_4H_9$ | $C_2H_5$ | Thien-3-yl | 2-Cl | $CONHC_2H_5$ | Cyan |
| 122 | $CH(CH_3)_2$ | $CH(CH_3)_2$ | 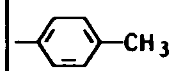 | 2-CN | $NHCOC_2H_5$ | Cyan |
| 123 | $C_2H_5$ | $C_4H_9$ | Thien-3-yl | 2-F | $NHCOC_4H_9$ | Cyan |
| 124 | $C_4H_9$ | $C_2H_5$ | $C_6H_5$ | H | $CO_2C_4H_9$ | Blau |
| 125 | $C_4H_9$ | $C_2H_5$ | $C_6H_5$ | H | 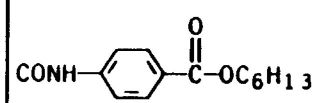 | Cyan |

Tabelle 14 (Fortsetzung)

| Beispiel Nr. | R1 | R2 | R3 | R4 | B | Farbe |
|---|---|---|---|---|---|---|
| 126 | $C_3H_6OC_2H_5$ | $C_4H_9$ | $C_6H_5$ | H | 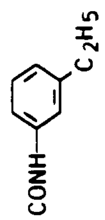 | Cyan |
| 127 | $C_3H_7$ | $C_2H_5$ | $C_6H_5$ | H | 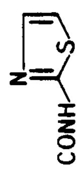 | Cyan |

Beispiel 128

Die Farbtonreinheit des Farbstoffs der Formel

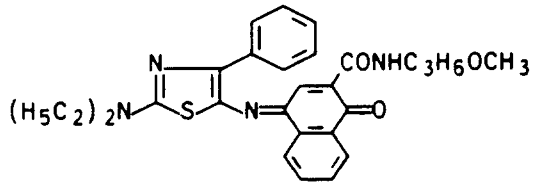

(128a)

wurde mit der Farbtonreinheit der aus der EP-A 227 096 bekannten Farbstoffe der Formel

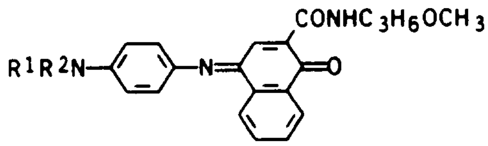

$R^1 = R^2 = CH_3$ (128b)
$R^1 = R^2 = C_2H_5$ (128c)

in Methylenchlorid verglichen. Zu diesem Zweck wurden im Helligkeitsbereich L: 60 < L < 95 die Brillanz (Chroma), Halbwertsbreite der Hauptabsorptionsbande (HBW) sowie der Farbton (HGD) nach CIELAB bestimmt. (Ein Vergleich verschiedener Farbstoffe ist nur bei ähnlicher Helligkeit und ähnlichem Farbton aussagekräftig.)

| Farbstoff-Nr. | Chroma | HBW [nm] | L | HGD | $\lambda_{max}$ [nm] |
|---|---|---|---|---|---|
| 128a | 66 | 109 | 70 | 223 | 625 |
| 128b | 55 | 128 | 70 | 231 | 647 |
| 128c | 61 | 123 | 70 | 223 | 665 |

Aus den vorstehend genannten Werten ergibt sich die coloristische Überlegenheit des Farbstoffs 128a.

Im Vergleich zu den bekannten Farbstoffen 128b und 128c weist der neue Farbstoff 128a einen steileren Anstieg der Absorptionsbande und eine höhere Transparenz im blauen und grünen Spektralbereich auf.

**Patentansprüche**

**1.** Thiazolfarbstoffe der Formel I

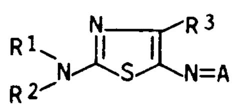

(I),

in der

$R^1$ und $R^2$ gleich oder verschieden sind und unabhängig voneinander jeweils Alkyl, das gegebenenfalls durch 1 bis 3 Sauerstoffatome unterbrochen ist, Alkanoyloxyalkyl oder Alkoxycarbonyloxyalkyl, wobei diese Reste jeweils bis zu 18 Kohlenstoffatome aufweisen und durch Phenyl, $C_1$-$C_4$-Alkylphenyl, $C_1$-$C_4$-Alkoxyphenyl, Hydroxy, Cyclohexyl oder Cyano substituiert sein können, Wasserstoff, gegebenenfalls durch $C_1$-$C_4$-Alkyl oder $C_1$-$C_4$-Alkoxy substituiertes Phenyl, Cyclohexyl oder einen Rest der Formel

$(CH_2\text{-})_kCOO\text{-}(Y\text{-}O\text{-})_m(W\text{-}O\text{-})_vL^1$ ,

worin

k für 2, 3 oder 4,

m und v gleich oder verschieden sind und unabhängig voneinander jeweils für 0, 1 oder 2,

Y und W gleich oder verschieden sind und unabhängig voneinander jeweils für $C_2$-$C_6$-Alkylen und

$L^1$ für $C_1$-$C_4$-Alkyl oder gegebenenfalls durch $C_1$-$C_4$-Alkyl oder $C_1$-$C_4$-Alkoxy substituiertes Phenyl stehen,

oder $R^1$ und $R^2$ zusammen mit dem sie verbindenden Stickstoffatom einen 5- oder 6-gliedrigen gesättigten heterocyclischen Rest, der weitere Heteroatome enthalten und durch $C_1$-$C_6$-Alkyl substituiert sein kann,

$R^3$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Hydroxy, Furyl oder Thienyl und

A einen Rest der Formel

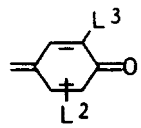

oder

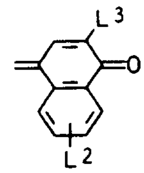

bedeuten, wobei

$L^2$ für Wasserstoff, Fluor, Chlor, Brom, Hydroxy, Nitro, $C_1$-$C_4$-Alkyl, Cyano, $C_1$-$C_4$-Alkylsulfonylamino oder einen Rest der Formel $COOR^1$, $CONHR^1$, $NHCOR^1$ oder $NHSO_2R^1$, worin $R^1$ jeweils die obengenannte Bedeutung besitzt, und

$L^3$ für Wasserstoff, Fluor, Chlor, Cyano oder einen Rest der Formel $CONHL^4$, $NHCOL^4$, $NHCONHL^4$, $SO_2NHL^4$, $NHSO_2L^4$ oder $COOR^1$ stehen, worin $R^1$ die obengenannte Bedeutung besitzt und $L^4$ jeweils die Bedeutung von Alkoxycarbonylphenyl, Alkoxycarbonyloxyphenyl, Alkanoylphenyl oder N-Monoalkylcarbamoylphenyl, wobei die Alkylreste in diesen Gruppen bis zu 12 Kohlenstoffatome aufweisen können, Phenyl, Thiazolyl oder $C_1$-$C_{12}$-Alkyl, das gegebenenfalls durch 1 bis 3 Sauerstoffatome unterbrochen ist, besitzt.

**2.** Thiazolfarbstoffe gemäß Anspruch 1, die der Formel II

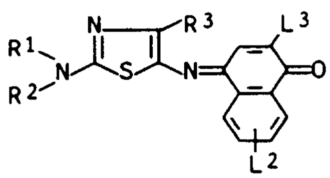

(II)

entsprechen, in der

$R^1$ und $R^2$ unabhängig voneinander Alkyl, das gegebenenfalls durch 1 bis 3 Sauerstoffatome unterbrochen ist, Alkanoyloxyalkyl oder Alkoxycarbonylalkyl, wobei diese Reste bis zu 12 Kohlenstoffatome aufweisen können, oder zusammen mit dem sie verbindenden Stickstoffatom einen 5- oder 6-gliedrigen gesättigten heterocyclischen Rest, der weitere Heteroatome enthalten kann, und

$L^2$ Wasserstoff oder einen Rest der Formel $CONHR^1$, $NHCOR^1$ oder $NHSO_2R^1$, wobei $R^1$ jeweils die obengenannte Bedeutung besitzt und

$L^3$ einen Rest der Formel $CONHL^4$, $NHCOL^4$, $SO_2NHL^4$ oder $NHSO_2L^4$

bedeuten, wobei $R^3$ und $L^4$ jeweils die in Anspruch 1 genannte Bedeutung besitzen.

**3.** Verfahren zur Übertragung von merocyaninartigen Farbstoffen von einem Träger auf ein mit Kunststoff beschichtetes Papier mit Hilfe einer Energiequelle, dadurch gekennzeichnet, daß man einen Träger verwendet, auf dem sich ein oder mehrere Thiazolfarbstoffe der Formel I

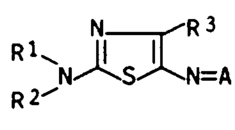

(I)

befinden, in der

$R^1$ und $R^2$ gleich oder verschieden sind und unabhängig voneinander jeweils Alkyl, das gegebenenfalls durch 1 bis 3 Sauerstoffatome unterbrochen ist, Alkanoyloxyalkyl oder Alkoxycarbonyloxyalkyl, wobei diese Reste jeweils bis zu 18 Kohlenstoffatome aufweisen und durch Phenyl, $C_1$-$C_4$-Alkylphenyl, $C_1$-$C_4$-Alkoxyphenyl, Hydroxy, Cyclohexyl oder Cyano substituiert sein können, Wasserstoff, gegebenenfalls durch $C_1$-$C_4$-Alkyl oder $C_1$-$C_4$-Alkoxy substituiertes Phenyl, Cyclohexyl oder einen Rest der Formel

$(CH_2\text{-})_kCOO\text{-}(Y\text{-}O\text{-})_m(W\text{-}O\text{-})_vL^1$ ,

worin

k für 2, 3 oder 4,

m und v gleich oder verschieden sind und unabhängig voneinander jeweils für 0, 1 oder 2,

Y und W gleich oder verschieden sind und unabhängig voneinander jeweils für $C_2$-$C_6$-Alkylen und

$L^1$ für $C_1$-$C_4$-Alkyl oder gegebenenfalls durch $C_1$-$C_4$-Alkyl oder $C_1$-$C_4$-Alkoxy substituiertes Phenyl stehen,

oder $R^1$ und $R^2$ zusammen mit dem sie verbindenden Stickstoffatom einen 5- oder 6-gliedrigen gesättigten heterocyclischen Rest, der weitere Heteroatome enthalten und durch $C_1$-$C_6$-Alkyl substituiert sein kann,

$R^3$ Wasserstoff, Halogen, $C_1$-$C_8$-Alkyl, gegebenenfalls durch $C_1$-$C_4$-Alkyl oder $C_1$-$C_4$-Alkoxy substituiertes Phenyl, gegebenenfalls durch $C_1$-$C_4$-Alkyl oder $C_1$-$C_4$-Alkoxy substituiertes Benzyl, Cyclohexyl, Hydroxy, Furyl oder Thienyl und

A einen Rest der Formel

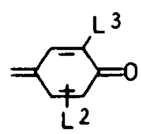

oder

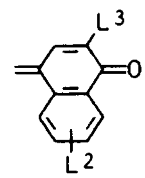

bedeuten, wobei

$L^2$ für Wasserstoff, Fluor, Chlor, Brom, Hydroxy, Nitro, $C_1$-$C_4$-Alkyl, Cyano, $C_1$-$C_4$-Alkylsulfonylamino oder einen Rest der Formel $COOR^1$, $CONHR^1$, $NHCOR^1$ oder $NHSO_2R^1$, worin $R^1$ jeweils die obengenannte Bedeutung besitzt, und

$L^3$ für Wasserstoff, Fluor, Chlor, Cyano oder einen Rest der Formel $CONHL^4$, $NHCOL^4$, $NHCONHL^4$, $SO_2NHL^4$, $NHSO_2L^4$ oder $COOR^1$ stehen, worin $R^1$ die obengenannte Bedeutung besitzt und $L^4$ jeweils die Bedeutung von Alkoxycarbonylphenyl, Alkoxycarbonyloxyphenyl, Alkanoylphenyl oder N-Monoalkylcarbamoylphenyl, wobei die Alkylreste in diesen Gruppen bis zu 12 Kohlenstoffatome aufweisen können, Phenyl, Thiazolyl oder $C_1$-$C_{12}$-Alkyl, das gegebenenfalls durch 1 bis 3 Sauerstoffatome unterbrochen ist, besitzt.

## Claims

**1.** A thiazole dye of the formula I

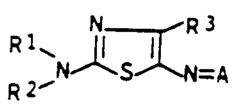

(I)

where

$R^1$ and $R^2$ are identical or different and each is, independently of the other, alkyl, which may be interrupted by from 1 to 3 oxygen atoms, alkanoyloxyalkyl or alkoxycarbonyloxyalkyl, which may each have up to 18 carbon atoms and be substituted by phenyl, $C_1$-$C_4$-alkylphenyl, $C_1$-$C_4$-alkoxyphenyl, hydroxyl, cyclohexyl or cyano, hydrogen, unsubstituted or $C_1$-$C_4$-alkyl- or $C_1$-$C_4$-alkoxy-substituted phenyl, cyclohexyl or a radical of the formula

$(CH_2-)_kCOO-(Y-O-)_m(W-O-)_vL^1$,

where

k is 2, 3 or 4,

m and v are identical or different and each is, independently of the other, 0, 1 or 2,
Y and W are identical or different and each is, independently of the other, $C_2$-$C_6$-alkylene and
$L^1$ is $C_1$-$C_4$-alkyl or unsubstituted or $C_1$-$C_4$-alkyl- or $C_1$-$C_4$-alkoxy-substituted phenyl, or $R^1$ and $R^2$, together with the linking nitrogen atom, are a 5- or 6-membered saturated heterocyclic radical which may contain further hetero atoms and be substituted by $C_1$-$C_6$-alkyl,
$R^3$ is hydrogen, halogen, $C_1$-$C_8$-alkyl, unsubstituted or $C_1$-$C_4$-alkyl or $C_1$-$C_4$-alkoxy-substituted phenyl, unsubstituted or $C_1$-$C_4$-alkyl- or $C_1$-$C_4$-alkoxy-substituted benzyl, cyclohexyl, hydroxyl, furyl or thienyl, and
A is a radical of the formula

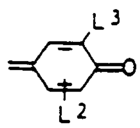

or

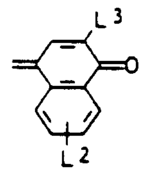

where
$L^2$ is hydrogen, fluorine, chlorine, bromine, hydroxyl, nitro, $C_1$-$C_4$-alkyl, cyano, $C_1$-$C_4$-alkylsulfonylamino or a radical of the formula $COOR^1$, $CONHR^1$, $NHCOR^1$ or $NHSO_2R^1$, in each of which $R^1$ is as defined above, and
$L^3$ is hydrogen, fluorine, chlorine, cyano or a radical of the formula $CONHL^4$, $NHCOL^4$, $NHCONHL^4$, $SO_2NHL^4$, $NHSO_2L^4$ or $COOR^1$, where $R^1$ is as defined above and $L^4$ is in each case alkoxycarbonylphenyl, alkoxycarbonyloxyphenyl, alkanoylphenyl or N-monoalkylcarbamoylphenyl, the alkyl moieties in these groups having up to 12 carbon atoms, phenyl, thiazolyl or $C_1$-$C_{12}$-alkyl, which may be interrupted by from 1 to 3 oxygen atoms.

**2.** A thiazole dye as claimed in claim 1, conforming to the formula II

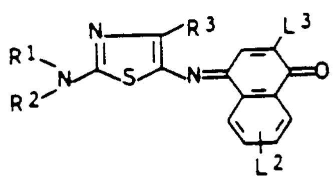

(II)

where
$R^1$ and $R^2$ are each, independently of the other, alkyl, which may be interrupted by from 1 to 3 oxygen atoms, alkanoyloxyalkyl or alkoxycarbonylalkyl, which may each have up to 12 carbon atoms, or together with the linking nitrogen atom, a 5- or 6-membered saturated heterocyclic radical which may contain further hetero atoms,
$L^2$ is hydrogen or a radical of the formula $CONHR^1$, $NHCOR^1$ or $NHSO_2R^1$, where $R^1$ is in each case as defined above, and
$L^3$ is a radical of the formula $CONHL^4$, $NHCOL^4$, $SO_2NHL^4$ or $NHSO_2L^4$,
where $R^3$ and $L^4$ are each as defined in claim 1.

**3.** A process for transferring a merocyanine-like dye from a transfer to plastic-coated paper with the aid of an energy source, which comprises using a transfer on which there is or are situated one or more thiazole dyes of the formula I

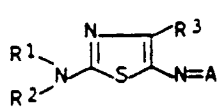

(I)

where

$R^1$ and $R^2$ are identical or different and each is, independently of the other, alkyl, which may be interrupted by from 1 to 3 oxygen atoms, alkanoyloxyalkyl or alkoxycarbonyloxyalkyl, which may each have up to 18 carbon atoms and be substituted by phenyl, $C_1$-$C_4$-alkylphenyl, $C_1$-$C_4$-alkoxyphenyl, hydroxyl, cyclohexyl or cyano, hydrogen, unsubstituted or $C_1$-$C_4$-alkyl- or $C_1$-$C_4$-alkoxy-substituted phenyl, cyclohexyl or a radical of the formula

$(CH_2\text{-})_kCOO\text{-}(Y\text{-}O\text{-})_m(W\text{-}O\text{-})_vL^1$,

where

k is 2, 3 or 4,

m and v are identical or different and each is, independently of the other, 0, 1 or 2,

Y and W are identical or different and each is, independently of the other, $C_2$-$C_6$-alkylene and

$L^1$ is $C_1$-$C_4$-alkyl or unsubstituted or $C_1$-$C_4$-alkyl- or $C_1$-$C_4$-alkoxy-substituted phenyl, or $R^1$ and $R^2$, together with the linking nitrogen atom, are a 5- or 6-membered saturated heterocyclic radical which may contain further hetero atoms and be substituted by $C_1$-$C_6$-alkyl,

$R^3$ is hydrogen, halogen, $C_1$-$C_8$-alkyl, unsubstituted or $C_1$-$C_4$-alkyl- or $C_1$-$C_4$-alkoxy-substituted phenyl, unsubstituted or $C_1$-$C_4$-alkyl- or $C_1$-$C_4$-alkoxy-substituted benzyl, cyclohexyl, hydroxyl, furyl or thienyl, and

A is a radical of the formula

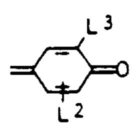 or 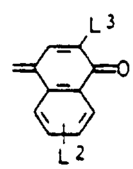

where

$L^2$ is hydrogen, fluorine, chlorine, bromine, hydroxyl, nitro, $C_1$-$C_4$-alkyl, cyano, $C_1$-$C_4$-alkyl-sulfonylamino or a radical of the formula $COOR^1$, $CONHR^1$, $NHCOR^1$ or $NHSO_2R^1$, in each of which $R^1$ is as defined above, and

$L^3$ is hydrogen, fluorine, chlorine, cyano or a radical of the formula $CONHL^4$, $NHCOL^4$, $NHCONHL^4$, $SO_2NHL^4$, $NHSO_2L^4$ or $COOR^1$, where $R^1$ is as defined above and $L^4$ is in each case alkoxycarbonylphenyl, alkoxycarbonyloxyphenyl, alkanoylphenyl or N-monoalkylcarbamoylphenyl, the alkyl moieties in these groups having up to 12 carbon atoms, phenyl, thiazolyl or $C_1$-$C_{12}$-alkyl, which may be interrupted by from 1 to 3 oxygen atoms.

**Revendications**

**1.** Colorants thiazoliques de formule I

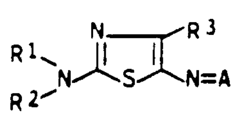 (I),

dans laquelle

$R^1$ et $R^2$ sont identiques ou différents et représentent chacun, indépendamment l'un de l'autre, un reste alkyle, qui est éventuellement interrompu par 1 à 3 atomes d'oxygène, alcanoyloxyalkyle ou alcoxycarbonyloxyalkyle, ces restes renfermant chacun jusqu'à 18 atomes de carbone et pouvant être substitués par des groupements phényle, (alkyl en $C_1$-$C_4$)phényle, (alcoxy en $C_1$-$C_4$)phényle, hydroxy, cyclohexyle ou cyano, un atome d'hydrogène, un reste phényle éventuellement substitué par un radical alkyle en $C_1$-$C_4$ ou alcoxy en $C_1$-$C_4$, un reste cyclohexyle ou un reste de formule

$(CH_2\text{-})_kCOO\text{-}(Y\text{-}O\text{-})_m(W\text{-}O\text{-})_vL^1$

où

k est mis pour 2, 3 ou 4

m et v sont identiques ou différents et sont mis chacun, indépendamment l'un de l'autre, pour 0, 1 ou 2,

Y et W sont identiques ou différents et sont mis chacun, indépendamment l'un de l'autre, pour un reste alkylène en $C_2$-$C_6$ et

$L^1$ est mis pour un reste alkyle en $C_1$-$C_4$ ou phényle éventuellement substitué par un reste alkyle en $C_1$-$C_4$ ou alcoxy en $C_1$-$C_4$,

ou $R^1$ et $R^2$ forment ensemble, avec l'atome d'azote qui les relie, un reste hétérocyclique saturé à 5 ou 6 termes qui peut contenir d'autres hétéroatomes et être substitué par un reste alkyle en $C_1$-$C_6$,

$R^3$ représente un atome d'hydrogène, d'halogène ou un reste alkyle en $C_1$-$C_8$, phényle éventuellement substitué par un radical alkyle en $C_1$-$C_4$ ou alcoxy en $C_1$-$C_4$, benzyle éventuellement substitué par un radical alkyle en $C_1$-$C_4$ ou alcoxy en $C_1$-$C_4$, cyclohexyle, hydroxy, furyle ou thiényle, et

A représente un reste de formule

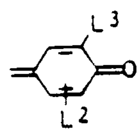

ou

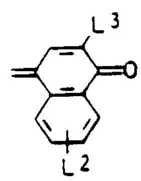

où

$L^2$ est mis pour un atome d'hydrogène, de fluor, de chlore, de brome, pour un reste hydroxy, nitro, alkyle en $C_1$-$C_4$, cyano, (alkyl en $C_1$-$C_4$)sulfonylamino ou pour un reste de formule $COOR^1$, $CONHR^1$, $NHCOR^1$ ou $NHSO_2R^1$, $R^1$ ayant chaque fois la signification indiquée précédemment, et

$L^3$ est mis pour un atome d'hydrogène, de fluor, de chlore, pour un reste cyano ou pour un reste de formule $CONHL^4$, $NHCOL^4$, $NHCONHL^4$, $SO_2NHL^4$, $NHSO_2L^4$ ou $COOR^1$, $R^1$ ayant la signification indiquée précédemment et $L^4$ représentant chaque fois un groupement alcoxycarbonylphényle, alcoxycarbonyloxyphényle, alcanoylphényle ou N-monoalkylcarbamoylphényle, les restes alkyle dans ces groupements pouvant renfermer jusqu'à 12 atomes de carbone, un reste phényle, thiazolyle ou alkyle en $C_1$-$C_{12}$, qui est interrompu éventuellement par 1 à 3 atomes d'oxygène.

**2.** Colorants thiazoliques selon la revendication 1 qui répondent à la formule II

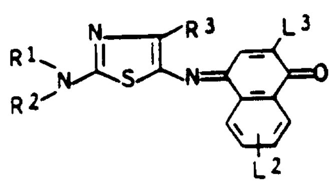

(II)

dans laquelle

$R^1$ et $R^2$ représentent chacun, indépendamment l'un de l'autre, un reste alkyle, qui est éventuellement interrompu par 1 à 3 atomes d'oxygène, alcanoyloxyalkyle ou alcoxycarbonylalkyle, ces restes pouvant renfermer jusqu'à 12 atomes de carbone, ou peuvent former ensemble, avec l'atome d'azote qui les relie, un reste hétérocyclique saturé à 5 ou 6 termes qui peut contenir d'autres hétéroatomes,

$L^2$ représente un atome d'hydrogène ou un reste de formule $CONHR^1$, $NHCOR^1$ ou $NHSO_2R^1$, $R^1$ ayant chaque fois la signification indiquée précédemment, et

$L^3$ représente un reste de formule $CONHL^4$, $NHCOL^4$, $SO_2NHL^4$ ou $NHSO_2L^4$,

$R^3$ et $L^4$ ayant chacun la signification indiquée dans la revendication 1.

**3.** Procédé pour le transfert de colorants du genre des mérocyanines d'un support à un papier revêtu d'une couche de matière plastique au moyen d'une source d'énergie, caractérisé en ce qu'on utilise un support sur lequel se trouvent un ou plusieurs colorants thiazoliques de formule I

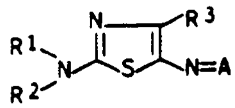

(I)

dans laquelle

$R^1$ et $R^2$ sont identiques ou différents et représentent chacun, indépendamment l'un de l'autre, un reste alkyle, qui est éventuellement interrompu par 1 à 3 atomes d'oxygène, alcanoyloxyalkyle ou alcoxycarbonyloxyalkyle, ces restes renfermant chacun jusqu'à 18 atomes de carbone et pouvant être substitués par des groupements phényle, (alkyl en $C_1$-$C_4$)phényle, (alcoxy en $C_1$-$C_4$)phényle, hydroxy, cyclohexyle ou cyano, un atome d'hydrogène, un reste phényle éventuellement substitué par un radical alkyle en $C_1$-$C_4$ ou alcoxy en $C_1$-$C_4$, un reste cyclohexyle ou un reste de formule

$(CH_2-)_kCOO-(Y-O-)_m(W-O-)_vL^1$

où

k est mis pour 2, 3 ou 4

m et v sont identiques ou différents et sont mis chacun, indépendamment l'un de l'autre, pour 0, 1 ou 2,

Y et W sont identiques ou différents et sont mis chacun, indépendamment l'un de l'autre, pour un reste alkylène en $C_2$-$C_6$ et

$L^1$ est mis pour un reste alkyle en $C_1$-$C_4$ ou phényle eventuellement substitué par un reste alkyle en $C_1$-$C_4$ ou alcoxy en $C_1$-$C_4$,

ou $R^1$ et $R^2$ forment ensemble, avec l'atome d'azote qui les relie, un reste hétérocyclique saturé à 5 ou 6 termes qui peut contenir d'autres hétéroatomes et être substitué par un reste alkyle en $C_1$-$C_6$,

$R^3$ représente un atome d'hydrogène, d'halogène ou un reste alkyle en $C_1$-$C_8$, phényle éventuellement substitué par un radical alkyle en $C_1$-$C_4$ ou alcoxy en $C_1$-$C_4$, benzyle éventuellement substitué par un radical alkyle en $C_1$-$C_4$ ou alcoxy en $C_1$-$C_4$, cyclohexyle, hydroxy, furyle ou thiényle, et

A représente un reste de formule

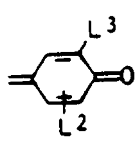

ou

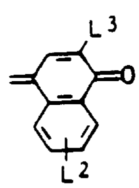

où

$L^2$ est mis pour un atome d'hydrogène, de fluor, de chlore, de brome, pour un reste hydroxy, nitro, alkyle en $C_1$-$C_4$, cyano, (alkyl en $C_1$-$C_4$)sulfonylamino ou pour un reste de formule $COOR^1$, $CONHR^1$, $NHCOR^1$ ou $NHSO_2R^1$, $R^1$ ayant chaque fois la signification indiquée précédemment, et

$L^3$ est mis pour un atome d'hydrogène, de fluor, de chlore, pour un reste cyano ou pour un reste de formule $CONHL^4$, $NHCOL^4$, $NHCONHL^4$, $SO_2NHL^4$, $NHSO_2L^4$ ou $COOR^1$, $R^1$ ayant la signification indiquée précédemment et $L^4$ représentant chaque fois un groupement alcoxycarbonylphényle, alcoxycarbonyloxyphényle, alcanoylphényle ou N-monoalkylcarbamoylphényle, les restes alkyle dans ces groupements pouvant renfermer jusqu'à 12 atomes de carbone, un reste phényle, thiazolyle ou alkyle en $C_1$-$C_{12}$, qui est

interrompu éventuellement par 1 à 3 atomes d'oxygène.